# EUROPEAN PATENT APPLICATION

(11) **EP 4 761 235 A1**
(43) Date of publication of application: **17.06.2026**
(21) Application number: 24871748.0
(22) Date of filing: 02.09.2024
(51) Int. Cl.: H04N 7/18, B60R 1/20, B60R 1/25, B60R 1/26, E02F 9/26

(54) **CONSTRUCTION MACHINE**

(30) Priority: 27.09.2023 JP 2023166547
(71) Applicant: Hitachi Construction Machinery Co., Ltd., Tokyo 110-0015 (JP)
(72) Inventor: SUGAWARA Takuma, Tsuchiura-shi, Ibaraki 300-0013 (JP); HAGIWARA Naoki, Tsuchiura-shi, Ibaraki 300-0013 (JP); MIZOGUCHI Kazuhiko, Tsuchiura-shi, Ibaraki 300-0013 (JP)
(74) Representative: Manitz Finsterwald Patent- und Rechtsanwaltspartnerschaft mbB
(86) International application number: PCT/JP2024/031503
(87) International publication number: WO 2025/069948

(57) **Abstract**

A shut-off lever that restricts the operation of the operation lever device, a camera that captures the surroundings of the vehicle body, a monitor that displays the camera image captured by the camera, a monitor operation device that instructs the enlargement of the display magnification of the camera image, and a controller that controls the display of the monitor according to the operation of the monitor operation device are provided. The controller that controls the display enlarges the camera image displayed on the monitor according to the display magnification instructed by the monitor operation device when the operation of the operation lever device is restricted by the shut-off lever. Even if the enlargement of the display magnification is instructed by the monitor operation device, when the restriction of the operation of the operation lever device by the shut-off lever is released, the camera image is displayed on the monitor at a predetermined display magnification, providing construction machinery. This suppresses the operator's oversight of obstacles during operation.

## Description

### Technical Field

The present invention relates to construction machinery such as hydraulic excavators.

### Background Art

Construction machinery such as hydraulic excavators may be configured to a function to provide the operator with camera images capturing the surroundings of the construction machinery. In this type of construction machinery, the camera image is divided into a plurality of areas, and while enlarging a selected area and reducing other areas, the display area of the camera image is maintained as a whole (Patent Document 1).

### Prior Art Literature

### Patent Document

Patent Document 1: JP 2018-33015 A

### Summary of the Invention

### Problems to be Solved by the Invention

However, in the construction machinery of Patent Document 1, obstacles around the non-enlarged areas are displayed smaller than necessary, which may cause the operator to overlook the displayed obstacles during operation.

The objective of the present invention is to provide construction machinery that can suppress the operator's overlook of obstacles during operation.

### Means for Solving the Problems

To achieve the above objective, the present invention provides construction machinery comprising: a vehicle body; a front work device attached to the vehicle body; an operation lever device for operating the vehicle body or the front work device; a shut-off lever for restricting the operation of the operation lever device; a camera for capturing the surroundings of the vehicle body; a monitor configured to display the camera images captured by the camera; a monitor operation device configured to instruct the magnification of the display ratio of the camera images displayed on the monitor; and a controller configured to control the display on the monitor based on the operation of the monitor operation device. The controller is configured to control the display such that: if the operation of the operation lever device is restricted by the shut-off lever, the camera images displayed on the monitor are enlarged based on the display ratio instructed by the monitor operation device; and if the magnification of the display ratio is instructed by the monitor operation device and the restriction on the operation of the operation lever device by the shut-off lever is cancelled, the camera images on the monitor are displayed at a predetermined display ratio.

### Effect of the Invention

According to the present invention, it is possible to suppress the operator's overlook of obstacles during operation.

### Brief Description of the Drawing

[FIG. 1] is a side view showing the appearance of a hydraulic excavator, which is an example of construction machinery according to the first embodiment of the present invention.
[FIG. 2] is a schematic view showing the interior of the operator's cabin of the hydraulic excavator in FIG. 1.
[FIG. 3] is a schematic view showing the overall control system of the construction machinery according to the first embodiment of the present invention.
[FIG. 4] is a block diagram schematically showing the functions of the controller of the construction machinery according to the first embodiment of the present invention.
[FIG. 5A] is an example of the operation of the touch panel of the monitor provided in the construction machinery according to the first embodiment of the present invention.
[FIG. 5B] is an example of the operation of the touch panel of the monitor provided in the construction machinery according to the first embodiment of the present invention.
[FIG. 6A] is a diagram showing an example of the display pattern of the camera image displayed on the monitor in the construction machinery according to the first embodiment of the present invention.
[FIG. 6B] is a diagram showing another example of the display pattern of the camera image displayed on the monitor in the construction machinery according to the first embodiment of the present invention.
[FIG. 7] is a diagram showing an example of the setting of the display area.
[FIG. 8] is a flowchart showing the display control procedure of the monitor by the controller provided in the construction machinery according to the first embodiment of the present invention.
[FIG. 9A] is an explanatory diagram explaining how the display of the camera image on the monitor is enlarged or reduced in response to the zoom operation in the first embodiment of the present invention.
[FIG. 9B] is an explanatory diagram explaining how the display of the camera image on the monitor is enlarged or reduced in response to the zoom operation in the first embodiment of the present invention.
[FIG. 9C] is an explanatory diagram explaining how the display of the camera image on the monitor is enlarged or reduced in response to the zoom operation in the first embodiment of the present invention.
[FIG. 10] is a flowchart showing the display control procedure of the monitor by the controller provided in the construction machinery according to the second embodiment of the present invention.
[FIG. 11] is a block diagram schematically showing the functions of the controller of the construction machinery according to the third embodiment of the present invention.
[FIG. 12] is a flowchart showing the display control procedure of the monitor by the controller provided in the construction machinery according to the third embodiment of the present invention.
[FIG. 13] is a diagram showing an example of the camera image of the display area forcibly displayed when an object is detected in the third embodiment of the present invention.
[FIG. 14] is a block diagram schematically showing the functions of the controller of the construction machinery according to the fourth embodiment of the present invention.
[FIG. 15] is a flowchart showing the display control procedure of the monitor by the controller provided in the construction machinery according to the fourth embodiment of the present invention.
[FIG. 16] is a diagram showing an example of the camera image of the display area forcibly displayed when the output or rate of change of the output of the acceleration sensor exceeds a predetermined value in the fourth embodiment of the present invention.
[FIG. 17] is a flowchart showing the display control procedure of the monitor by the controller provided in the construction machinery according to the fifth embodiment of the present invention.

### Mode for Carrying out the Invention

The embodiments of the present invention will be described below with reference to the drawings.

### (First Embodiment)

### -Construction Machinery-

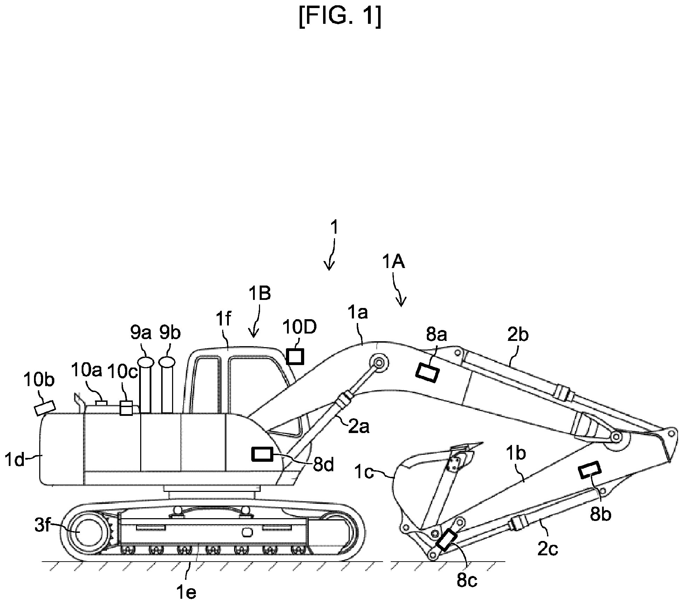

FIG. 1 is a side view showing the appearance of a hydraulic excavator, which is an example of construction machinery according to the first embodiment of the present invention. The right side in FIG. 1 is the front of the swing body 1d.

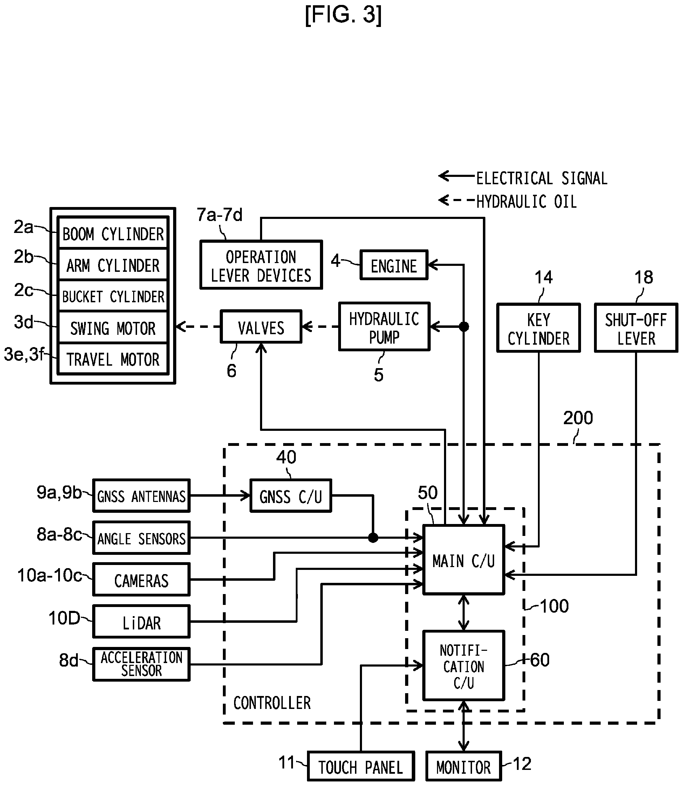

The hydraulic excavator 1 includes a vehicle body 1B and an articulated front work device 1A attached to the vehicle body 1B. The front work device 1A includes a boom 1a, an arm 1b, and a bucket 1c, each of which rotates in a vertical plane. The vehicle body 1B includes a travel body 1e and a swing body 1d mounted rotatably on the travel body 1e. The swing body 1d is provided with an operator's cabin 1f. The base end of the boom 1a of the front work device 1A is connected to the front part of the swing body 1d, the arm 1b is connected to the tip of the boom 1a, and the bucket 1c is connected to the tip of the arm 1b. The boom 1a, arm 1b, bucket 1c, swing body 1d, and travel body 1e are each driven by corresponding hydraulic actuators, specifically, a boom cylinder 2a, an arm cylinder 2b, a bucket cylinder 2c, a swing motor 3d (FIG. 3), and left and right travel motors 3e, 3f.

The swing body 1d of the hydraulic excavator 1 is provided with an acceleration sensor 8d that outputs the ground angle (angle relative to the horizontal plane) of the swing body 1d. An example of the acceleration sensor 8d is an IMU (Inertial Measurement Unit). Additionally, the boom 1a, arm 1b, and bucket 1c (specifically the bucket link) are each provided with angle sensors 8a-8c that detect the rotation angles of the boom 1a, arm 1b, and bucket 1c. In this embodiment, IMUs that measure the ground angle of each corresponding member are used as the angle sensors 8a-8c, but angle meters that measure the relative angle between two members can also be used.

The swing body 1d is also provided with GNSS antennas 9a, 9b for acquiring the current position of the hydraulic excavator 1, and a plurality of cameras 10a, 10b, 10c for capturing the surroundings of the vehicle body 1B. Camera 10a captures the left side of the swing body 1d, camera 10b captures the rear, and camera 10c captures the right side. Furthermore, the hydraulic excavator 1 may be provided with a LiDAR (Light Detection and Ranging) 10D as an object detection device for detecting objects around the vehicle body 1B. LiDAR 10D emits numerous laser beams with optical axis angles deviated in the horizontal (yaw) and vertical (pitch) directions, and measures the distance to each laser's irradiation point from the time it takes for each laser beam to reflect off an object and return. When provided with LiDAR 10D, the output of LiDAR 10D provides position data of each irradiation point (point cloud) based on the position of LiDAR 10D as measurement data, allowing for the acquisition of three-dimensional measurement data (point cloud data) of the terrain (surface shape), and the detection of obstacles such as humans and other construction machinery. However, it is also possible to process the captured images from cameras 10a-10c to detect obstacles through image recognition, and the object detection device can be implemented by the cameras 10a-10c.

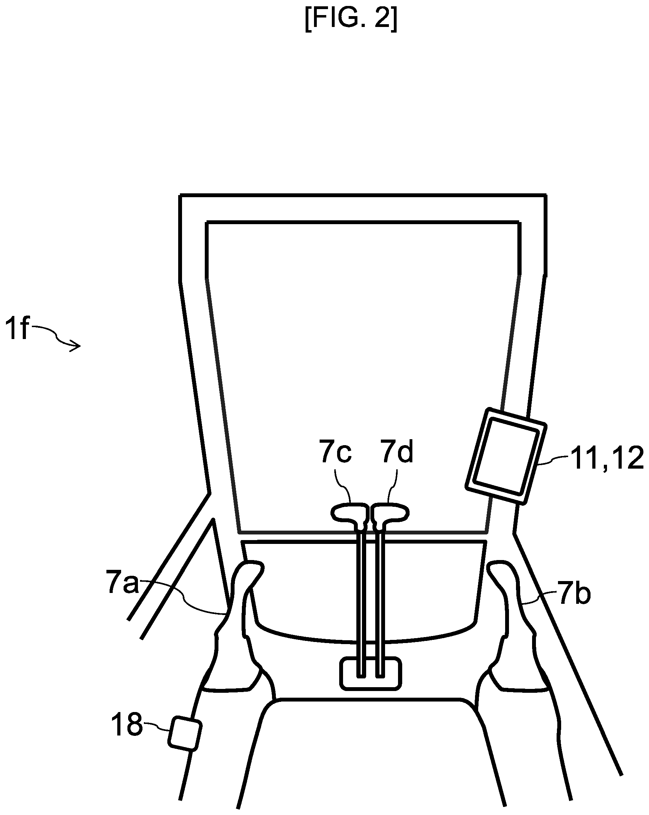

Additionally, although not shown in FIG. 1, the swing body 1d is provided with an engine 4 as a prime mover, a hydraulic pump 5 driven by the engine 4, and a valve 6 for controlling the flow of pressure oil from the hydraulic pump 5 to the hydraulic actuators (such as the boom cylinder 2a), as shown in FIG. 3. The valve 6 is controlled in response to the operation of the operation lever devices 7a-7d (FIG. 2) provided in the operator's cabin 1f, controlling the supply direction and flow rate of pressure oil from the hydraulic pump 5 to each hydraulic actuator, thereby operating each actuator. As a prime mover, an electric motor may be used instead of the engine 4.

### -Operator's Cabin-

FIG. 2 is a schematic view showing the interior of the operator's cabin 1f. The operator's cabin 1f is provided with operation lever devices 7a-7d for operating the vehicle body or the front work device, a shut-off lever 18 for restricting the operation of the operation lever devices 7a-7d, and a monitor 12 for displaying the camera images captured by cameras 10a-10c. For example, when the operation lever device 7a on the left side of the operator's seat is operated back and forth, the swing body 1d swings left and right, and when operated left and right, the arm 1b rotates back and forth. When the operation lever device 7b on the right side of the operator's seat is operated back and forth, the boom 1a rotates up and down, and when operated left and right, the bucket 1c rotates. Additionally, as a monitor operation device for instructing the enlargement of the display magnification of the camera images displayed on the monitor 12, the monitor 12 in this embodiment is provided with a touch panel 11.

### -Control System-

FIG. 3 is a schematic diagram representing the entirety of the control system of construction machinery according to the first embodiment of this invention. The swing body 1d of the hydraulic excavator 1 is provided with a controller 200 that controls the mounted equipment. The controller 200 includes a main C/U50 that controls actuators, a GNSSC/U40 that processes information acquired by GNSS antennas 9a, 9b, and a notification C/U 60 that controls various notifications to the operator.

Signals are input to the main C/U50 from operation lever devices 7a-7d, angle sensors 8a-8c, cameras 10a-10c, LiDAR 10D, acceleration sensor 8d, key cylinder 14, shut-off lever 18, etc. The main C/U50 controls the engine 4, hydraulic pump 5, and valve 6 according to these input signals, and drives the hydraulic excavator 1 by controlling hydraulic actuators such as boom cylinder 2a. The key cylinder 14 is an operating device that instructs the start and stop of the engine 4 and is installed in the operator's cab 1f. The shut-off lever 18 is an operating device for restricting the operation of operation lever devices 7a-7d as described above, and it blocks the pilot pressure driving valve 6 to hydraulically limit the operation of hydraulic actuators by operation lever devices 7a-7d. Additionally, depending on the position of the shut-off lever 18, the main C/U 50 prohibits the output of command signals to valve 6 (specifically, the solenoid valve controlling the pilot pressure to valve 6) to electrically limit the operation of hydraulic actuators by operation lever devices 7a-7d. In any configuration, the position of the shut-off lever 18 is detected by a potentiometer (not shown) and input to the main C/U50.

The notification C/U60 exchanges data with the main C/U50 and has the function of displaying the operating status of the hydraulic excavator 1, menu screens, camera images captured by cameras 10a-10c, etc., on monitor 12 according to the operation of touch panel 11.

The notification C/U60, together with the main C/U50, constitutes a display controller 100 that controls the display of monitor 12 according to the operation of touch panel 11, serves as a visibility assistance system. In this embodiment, the functions of the controller 200 as the display controller 100 are shared between the main C/U50 and the notification C/U60, but the functions of the display controller 100 may be provided in a single C/U (Control Unit).

### -Controller-

The controller 200 generates display signals based on signals from touch panel 11 and cameras 10a-10c, and outputs the generated display signals to monitor 12 to control the display of monitor 12.

This controller 200, which controls the display of monitor 12, has the function of enlarging or reducing the camera images displayed on monitor 12 according to the display magnification instructed by touch panel 11, relative to a pre-set display area (described later). However, the enlargement and reduction of camera images are performed on the condition that the operation of operation lever devices 7a-7d is restricted (disabled) by the shut-off lever 18. In other words, enlargement and reduction of camera images are allowed only when the operation of operation lever devices 7a-7d is restricted by the shut-off lever 18.

Specifically, the controller 200 stores a pre-set display area for camera images so that a predetermined area around the vehicle body 1B is displayed on monitor 12, and when the operation of operation lever devices 7a-7d is restricted by the shut-off lever 18, it enlarges the camera images displayed on monitor 12 according to the display magnification instructed by touch panel 11. The same applies when reducing after enlargement. Conversely, when the restriction on the operation of operation lever devices 7a-7d by the shut-off lever 18 is lifted, the controller 200 displays the camera images on monitor 12 at a set magnification (a predetermined display magnification) regardless of the current display area or magnification of the camera images, even if enlargement of the display magnification is instructed by touch panel 11, and displays the set display area on monitor 12.

In other words, even if the current display area of the camera images is offset from the set display area or the display magnification is changed from the set magnification, the set display area is displayed. The set magnification is the display magnification of the set display area. The display of this set display area is a forced process, and when forcibly displaying the set display area, no comparison is made between the display area and magnification that were displayed as camera images immediately before and the set display area. When the shut-off lever 18 is switched to the release position, if the set display area is already displayed, even if the display of camera images is forcibly switched to the set display area, the display of camera images does not change as a result.

In this embodiment, the controller 200 enlarges or reduces camera images according to pinch operations (pinch-out/pinch-in operations) performed on touch panel 11. Furthermore, in this embodiment, a plurality of display patterns are prepared as options for camera images, and the controller 200 selects a display pattern from the options according to the operation signals input from touch panel 11, and displays the camera images on monitor 12 in the selected display pattern.

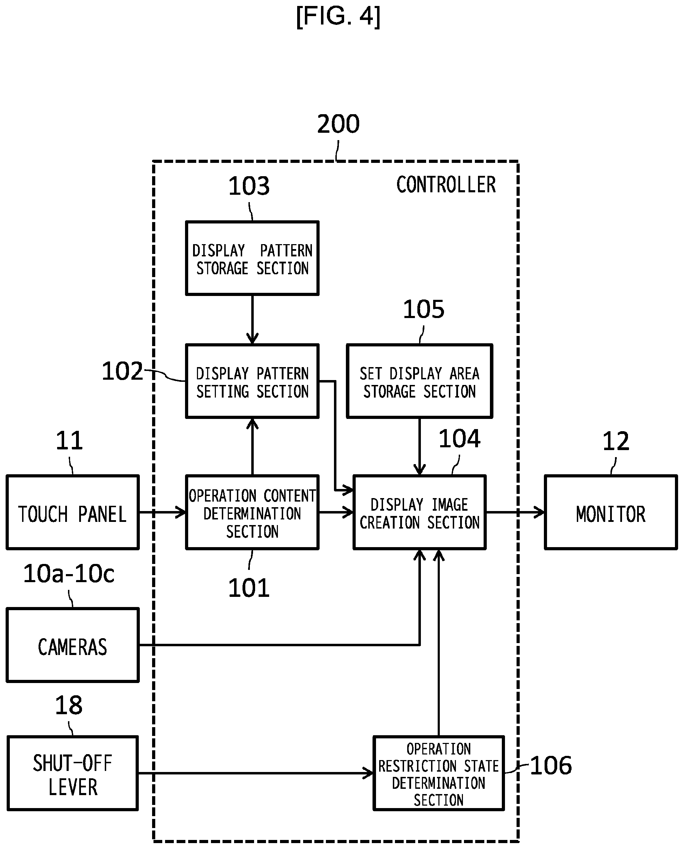

A block diagram schematically representing the functions of controller 200 is shown in FIG. 4. As shown in FIG. 4, the controller 200 is provided with an operation content determination section 101, a display pattern setting section 102, a display pattern storage section 103, a display image creation section 104, a set display area storage section 105, and an operation restriction state determination section 106, which are used to execute the above display control. These may be realized by hardware elements such as circuits or by software elements such as programs. For example, the operation content determination section 101, display pattern setting section 102, display image creation section 104, and operation restriction state determination section 106 are functions executed by the computing device (e.g., CPU) of controller 200, and the display pattern storage section 103 and set display area storage section 105 are composed of storage devices (e.g., HDD) provided in or connected to controller 200. Below, each function will be explained.

### [Operation Restriction State Determination Section]

The operation restriction state determination section 106 determines whether the position of the shut-off lever 18, based on the output of the potentiometer of the shut-off lever 18, is a restriction position that limits (disables) the operation of operation lever devices 7a-7d or a release position that allows the operation of operation lever devices 7a-7d.

### [Operation Content Determination Section]

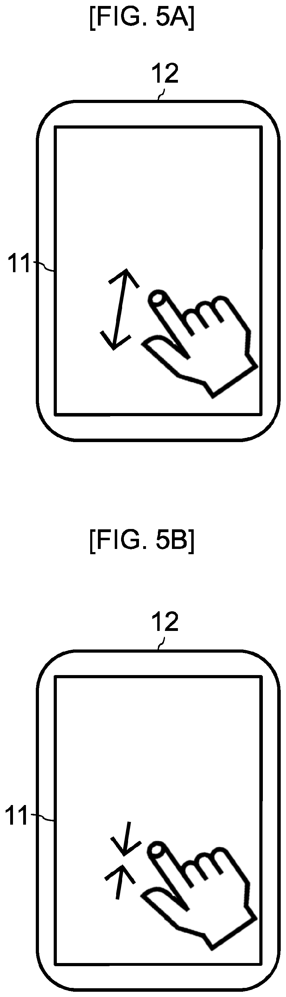

The operation content determination section 101 determines the operation content based on the operation signals input from touch panel 11. In the operation content determination section 101, the operation content is determined based on the position touched by the operator on the screen of touch panel 11, the number of fingers touched, the movement of the fingers touched, etc. For example, pinch-out operations (FIG. 5A) and pinch-in operations (FIG. 5B) are recognized by the movement of the distance between two fingers touching the screen widening or narrowing, and the screen display is enlarged or reduced centered on the intermediate position of the two fingers touched.

### [Display Pattern Setting Section]

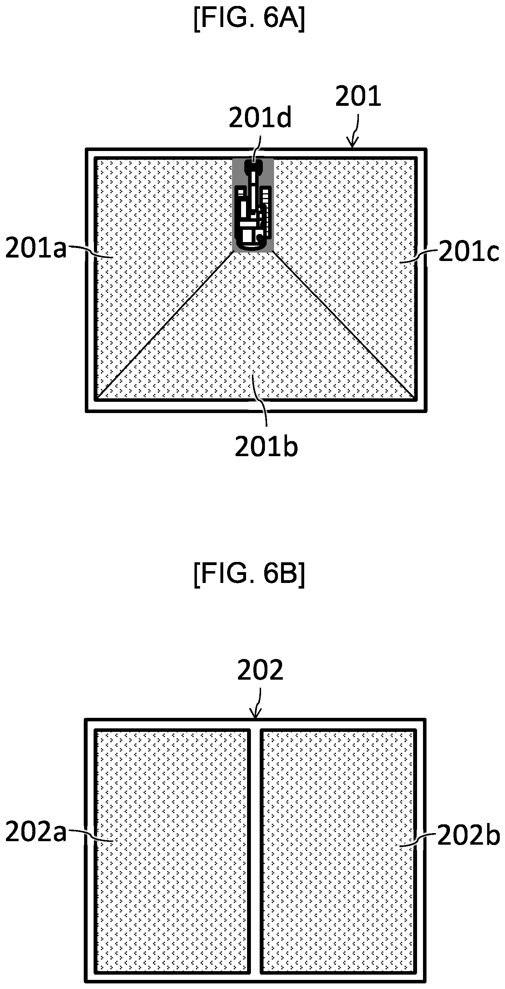

The display pattern setting section 102 sets the display pattern specified by touch panel 11 based on the operation content determined by the operation content determination section 101. The display pattern is pre-stored in the display pattern storage section 103 as at least one display pattern (a plurality in this embodiment) for the camera images displayed on monitor 12. The display pattern setting section 102 reads and sets the display pattern corresponding to the operation content determined by the operation content determination section 101 from the display pattern storage section 103. Examples of display patterns of camera images displayed on monitor 12 are shown in FIGS. 6A and 6B.

The camera image 201 related to the first display pattern illustrated in FIG. 6A is a real-time overhead image of the hydraulic excavator 1 generated by synthesizing the captured images of cameras 10a-10c. Specifically, the camera image 201 is a projected display of an overhead image around the hydraulic excavator icon 201d, generated by synthesizing the captured images of cameras 10a, 10b, 10c. In the left area 201a of the hydraulic excavator icon 201d in camera image 201, the captured image of camera 10a is converted into an overhead image and displayed. Similarly, in the rear area 201b and right area 201c of the hydraulic excavator icon 201d, the captured images of cameras 10b, 10c are converted into overhead images and displayed.

The camera image 202 related to the second display pattern illustrated in FIG. 6B is a display where the captured images of cameras 10a, 10b are trimmed and arranged side by side in adjacent areas 202a, 202b. Different camera images are displayed in areas 202a, 202b, but it is also possible to arrange and display different areas of the same camera's captured image in areas 202a, 202b. FIG. 6B illustrates an example where areas 202a, 202b displaying two camera images are arranged side by side, but a screen configuration where areas 202a, 202b are arranged vertically is also possible. Additionally, the camera images displayed in areas 202a, 202b can be switched arbitrarily, and one captured image selected from cameras 10a-10c can be displayed in each of areas 202a, 202b. Additionally, it is possible to adopt a screen configuration that displays two camera images side by side, or instead of displaying a plurality of images side by side, a screen configuration can be adopted that enlarges and displays only one selected image from cameras 10a-10c.

### [Set Display Area Memory Section]

In FIG.4, the set display area memory section 105 stores a pre-set display area for the camera images displayed on monitor 12, so that a predetermined area around the vehicle body 1B is displayed on monitor 12. The set display area is the recommended area of the surrounding region displayed in the camera images on monitor 12 during the operation of the hydraulic excavator 1. The set display area can be initially set at the time of shipment of the hydraulic excavator 1 and can be modified as needed thereafter. Additionally, the set display area can be a specific size or an area defined by upper and lower limits of width. The predetermined area around the vehicle body 1B related to the set display area is the area where interference between obstacles and the vehicle body 1B should be noted. In this embodiment, since the rear end of the swing body 1d is a blind spot for the operator boarding the operator's cab 1f and is the part that describes the maximum swing trajectory of the swing body 1d, the area corresponding to the swing radius of the rear end of the swing body 1d is set as the predetermined area. In other words, in this embodiment, the camera images of the set display area projected on monitor 12 show the surrounding area beyond the swing radius of the rear end of the swing body 1d. When a plurality of patterns are prepared, the set display area memory section 105 stores individually set display magnifications (setting magnifications) for each display pattern so that the set display area is displayed on monitor 12 for each display pattern.

The area corresponding to the swing radius of the rear end of the swing body 1d is the narrowest area set as the set display area, and the set display area can be set to a wider area than this. However, if the area is unnecessarily wide, obstacles appearing on the screen become smaller and harder to confirm on monitor 12, so it is necessary to ensure that obstacles appearing on monitor 12 do not become excessively small.

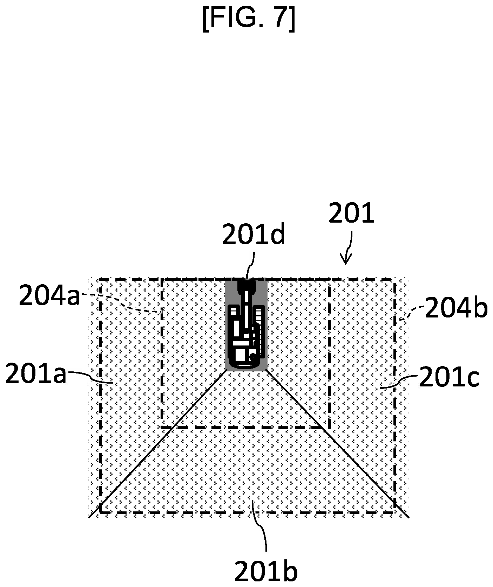

FIG.7 is a diagram showing an example of setting the display area. The smaller area 204a shown by the dotted line in FIG.7 is an example of the boundary of the area around the vehicle body that should be shown to the operator through monitor 12 as a visibility assistance system during the operation of the hydraulic excavator 1. In the example of FIG.1, area 204a is set to cover the maximum swing radius of the hydraulic excavator 1. Area 204a is cited as an example of the size of the set display area. Additionally, the larger area 204b shown by the dotted line in FIG.7 is an example of the boundary that defines the limit on the wide side of the area set as the set display area. When displaying an area beyond this area 204b, obstacles displayed in camera image 201 become excessively small, and the visibility of obstacles is excessively reduced. The set display area should not be wider than this area 204b. In FIG.7, camera image 201, which is a composite overhead image, is illustrated, but the concept is the same for camera image 202 (FIG. 6B) that displays individual camera images.

### [Display Image Creation Section]

In FIG.4, the display image creation section 104 generates display images of the display pattern set by the display pattern setting section 102 from image data input in real-time from cameras 10a-10c based on operation signals input from touch panel 11, and outputs them to monitor 12. Additionally, the display image creation section 104 outputs necessary information such as meters, maps, menu screens, and setting screens to monitor 12 as appropriate based on operation signals input from touch panel 11. Furthermore, the display image creation section 104 enlarges or reduces the camera image according to the operation when a pinch operation is determined by the operation content determination section 101, based on the determination result of the operation restriction state determination section 106, provided that the operation lever devices 7a-7d is restricted by the shut-off lever 18. However, if the restriction on the operation of the operation lever devices 7a-7d by the shut-off lever 18 is lifted, the display image creation section 104 displays the camera image of the set display area on monitor 12 at the setting magnification, regardless of the current magnification ratio of the camera image.

For example, if the operator interrupts the operation of the hydraulic excavator 1 for a break, etc., the operator can quickly check the situation around the vehicle body 1B by enlarging the camera image before switching the shut-off lever 18 to the release position when resuming the operation of the hydraulic excavator 1. Then, when the operator switches the shut-off lever 18 to the release position and starts the operation of the hydraulic excavator 1, the camera image automatically switches to a state displaying the set display area without the operator having to adjust the magnification ratio of the camera image.

### -Display Control-

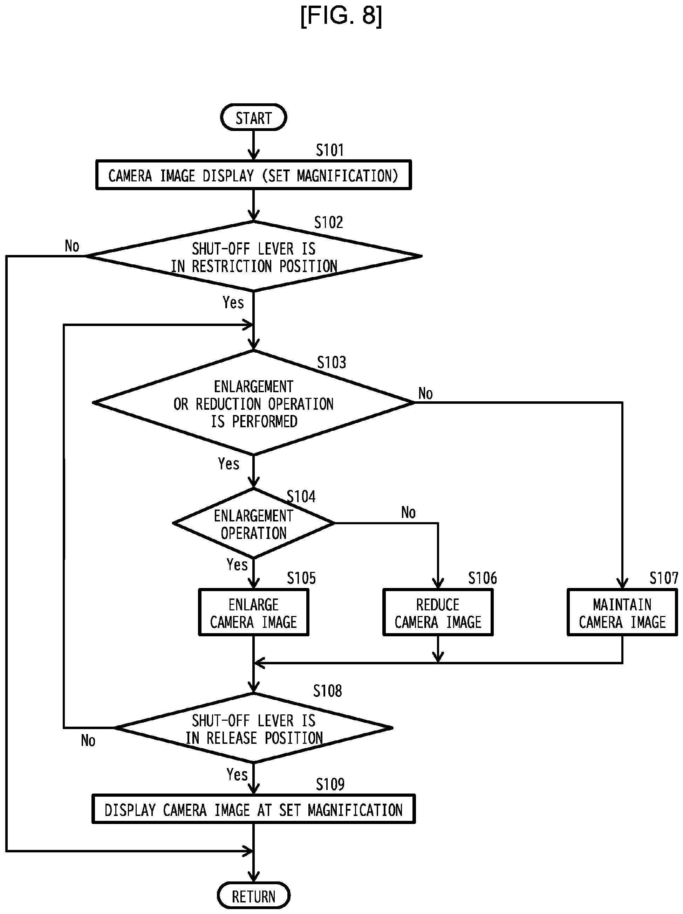

FIG. 8 is a flowchart showing the display control procedure of monitor 12 by controller 200. Controller 200 periodically executes the flow of FIG. 8 (for example, at a short cycle of about 0.1s) while powered.

When the flow of FIG. 8 starts, controller 200 sets the display magnification of the camera image to the setting display magnification and displays the camera image of the set display area (camera image at the setting magnification) on monitor 12 (step S101), and determines whether the position of shut-off lever 18 is at the restriction position using the operation restriction state determination section 106 (step S102). If the position of shut-off lever 18 is at the release position, controller 200 skips the following process and returns the procedure to step S101. If the position of shut-off lever 18 is at the restriction position, controller 200 determines whether a camera image enlargement operation (FIG. 5A) or reduction operation (FIG. 5B) is being performed on touch panel 11 using the operation content determination section 101 (step S103). If an enlargement or reduction operation of the camera image is being performed, controller 200 determines whether the operation is an enlargement operation of the camera image using the operation content determination section 101 (step S104).

If it is determined in step S104 that a camera image enlargement operation is being performed, controller 200 generates an enlarged image according to the operation using the display image creation section 104, outputs it to monitor 12, enlarges the camera image displayed on monitor 12 (step S105), and moves the procedure to step S108. On the other hand, if it is determined in step S104 that a camera image enlargement operation is not being performed, meaning a reduction operation is being performed, controller 200 generates a reduced image according to the operation using the display image creation section 104, outputs it to monitor 12, reduces the camera image displayed on monitor 12 (step S106), and moves the procedure to step S108. Additionally, if neither enlargement nor reduction operation of the camera image is being performed, controller 200 moves the procedure to step S108 without enlarging or reducing the camera image (step S107).

When the procedure moves to step S108, controller 200 determines whether the position of shut-off lever 18 is at the release position using the operation restriction state determination section 106. If the position of shut-off lever 18 is at the release position, controller 200 creates and outputs a camera image (camera image at the setting magnification) that displays the set display area regardless of the display magnification or display area of the currently displayed camera image using the display image creation section 104, displays it on monitor 12 (step S109), and returns the procedure to step S101. If the position of shut-off lever 18 is at the restriction position, controller 200 returns the procedure from step S108 to step S103.

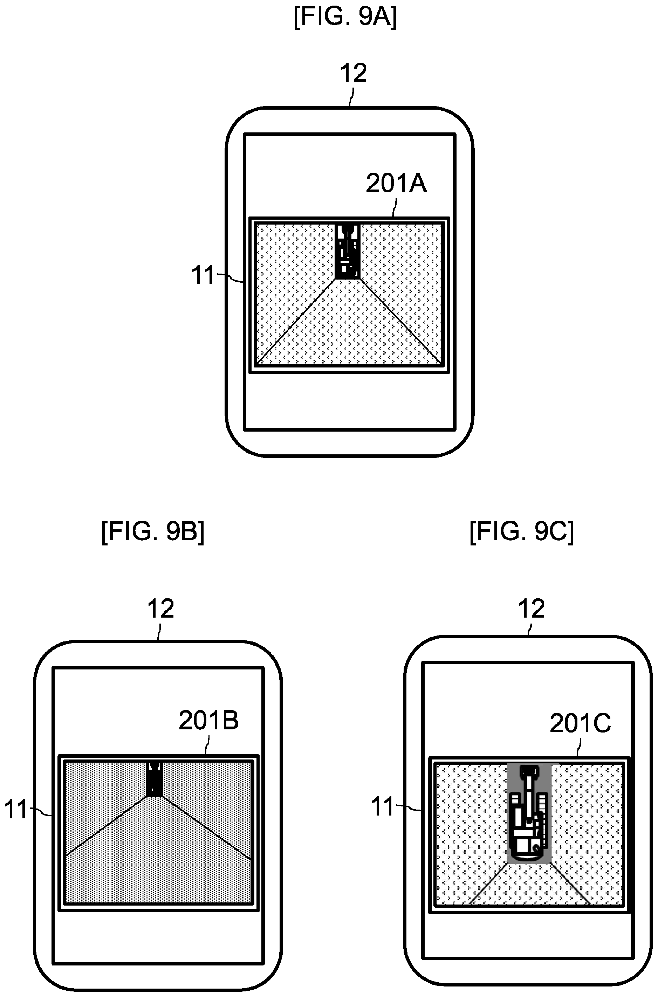

FIGS. 9A-9C are explanatory diagrams illustrating how the display of the camera image on the monitor is enlarged or reduced according to the enlargement or reduction operation. For example, in step S101 of FIG. 8, camera image 201A shown in FIG. 9A is displayed on monitor 12. Camera image 201A is an image at the setting magnification that displays the set display area, and during the operation of the hydraulic excavator 1, the area to be shown to the operator is displayed at an appropriate size, and if the expected obstacles are within the display area of camera image 201A, those obstacles are clearly captured in camera image 201A.

If a reduction operation is performed on this camera image 201A, and if shut-off lever 18 is at the restriction position, camera image 201A is reduced, and a wider camera image 201B than camera image 201A, as shown in FIG. 9B, is displayed on monitor 12. Additionally, if an enlargement operation is performed on camera image 201A, and if shut-off lever 18 is at the restriction position, camera image 201A is enlarged, and a narrower camera image 201C than camera image 201A, as shown in FIG. 9C, is displayed on monitor 12. Camera image 201B is a reduced display of a composite overhead image using the captured images from cameras 10a-10c, allowing a wide area to be checked at a glance, but the display of each captured image from cameras 10a-10c and the hydraulic excavator icon 201d becomes smaller, and if there are obstacles around vehicle body 1B, the display of obstacles captured in the camera image also becomes smaller. Camera image 201C, in contrast to camera image 201B, shows a larger area near the hydraulic excavator 1, but the display area is missing relative to the set display area, narrowing the visible range.

In this embodiment, when shut-off lever 18 is switched to the release position, the camera image currently displayed on monitor 12, whether it is at the setting magnification like camera image 201A or at a lower or higher magnification than the setting magnification like camera images 201B or 201C, is displayed as camera image 201A at the setting magnification on monitor 12 through the process of step S109.

### -Effect-

(1) In this embodiment, the controller 200 can enlarge the camera image displayed on the monitor 12 according to the display magnification indicated by the touch panel 11, provided that the operation of the operation lever devices 7a-7d is restricted by the shut-off lever 18. This allows the operator to adjust the display magnification of the camera image as desired, such as when wanting to check the detailed state near the hydraulic excavator 1, and change the visible area on the monitor 12 according to the purpose, thereby contributing to improved work efficiency. This allows the operator to arbitrarily adjust the display magnification of the camera image and change the area visible on monitor 12 according to the purpose, such as performing zoom operations when wanting to check the detailed condition near the hydraulic excavator 1, thereby contributing to improved work efficiency.

Additionally, while enlarging the camera image displayed on the monitor 12 is convenient for the operator to enlarge and check the area of interest in detail, there is a possibility that the area displayed by the camera image may become excessively narrow during the operation of the hydraulic excavator 1. The primary purpose of displaying the camera image is to provide the operator with visual information around the hydraulic excavator 1 during operation, and there is a recommended appropriate range for the display area. For example, if the camera image remains enlarged while the operator is operating the hydraulic excavator 1, there may be a deficiency in the area displayed on the monitor 12 relative to the appropriate range that should be presented to the operator, potentially preventing the operator from visually recognizing the current situation around the hydraulic excavator 1. The primary purpose of displaying camera images is to provide the operator with visual information about the surroundings of the hydraulic excavator 1 during operation, and there is a recommended appropriate range for the display area. For example, if the operator is operating the hydraulic excavator 1 and the camera image remains enlarged, there may be a deficiency in the area displayed on the monitor 12 relative to the appropriate range that should be presented to the operator, potentially preventing the operator from visually recognizing the current situation around the hydraulic excavator 1.

In contrast, the controller 200 allows changes to the display magnification of the camera image, provided that the operation of the operation lever devices 7a-7d is restricted by the shut-off lever 18, and when the operation restriction by the shut-off lever 18 is lifted, the camera image is displayed on the monitor 12 at the set magnification regardless of the current display magnification. Therefore, the camera image displayed on the monitor 12 during the operation of the hydraulic excavator 1 automatically becomes the set magnification. Therefore, during the operation of the hydraulic excavator 1, the camera image displayed on the monitor 12 automatically adjusts to the set magnification.

As described above, according to this embodiment, during the operation of the hydraulic excavator 1, the appropriate range is displayed on the monitor 12, which can prevent the operator from overlooking obstacles. For example, when the operator resumes operation of the hydraulic excavator 1 after a break, the operator can quickly check various situations by adjusting the display magnification of the camera image on the monitor 12 while parked, and when switching the shut-off lever 18 to the release position to start the operation of the hydraulic excavator 1, the display magnification of the camera image on the monitor 12 automatically becomes the set magnification without the operator having to manually adjust it each time, thus addressing the issue of forgetting to adjust the camera image and reducing the operator's effort in adjusting the camera image. For example, when the operator resumes the operation of the hydraulic excavator 1 after a break, they can quickly check various conditions by adjusting the display magnification of the camera image on monitor 12 while the machine is stopped. Furthermore, when switching the shut-off lever 18 to the release position to start the operation of the hydraulic excavator 1, the display magnification of the camera image on monitor 12 is automatically set to the predetermined magnification without the operator having to manually adjust it each time. This not only prevents forgetting to adjust the camera image but also reduces the effort required by the operator to adjust the camera image, thereby improving efficiency.

If the camera image displayed on the monitor 12 can be reduced, it is convenient for quickly checking the overall situation around the hydraulic excavator 1. However, on the other hand, there is a possibility that the area displayed by the camera image may become excessively wide during the operation of the hydraulic excavator 1. If the display area of the camera image exceeds the appropriate range and is wide, the display of obstacles and other information that should be notified to the operator may become too small and overlooked. In this case as well, when the operation restriction by the shut-off lever 18 is lifted, the camera image is displayed on the monitor 12 at the set magnification regardless of the current display magnification, achieving the same effect as in the case of enlarged display. However, on the other hand, there is a possibility that the area displayed by the camera image may become excessively wide during the operation of the hydraulic excavator 1. If the display area of the camera image is too wide beyond the appropriate range, there is a possibility that the display of obstacles and other items that should be notified to the operator may become too small and be overlooked. In this case as well, if the operation restriction of the operation lever devices 7a-7d by the shut-off lever 18 is released, the camera image is displayed on the monitor 12 at the set magnification regardless of the current display magnification of the camera image, achieving the same effect as in the case of enlarged display.

(2) Among the a plurality of display patterns, there is an overhead image of the hydraulic excavator 1 generated by combining images taken by the plurality of cameras 10a-10c, and by displaying the set display area in this overhead image, the operator can easily grasp the positional relationship between obstacles and the hydraulic excavator 1.

(3) The set display area is configured to display the area corresponding to the turning radius of the swing body 1d, so that obstacles that may interfere with the vehicle body 1B when it turns can be displayed on the monitor 12, allowing for reasonable suppression of interference between the vehicle body 1B and obstacles.

(4) In this embodiment, the plurality of display patterns for the camera image are provided, allowing for arbitrary switching between display patterns, and each display pattern has individually set display magnification so that the set display area is displayed on the monitor 12 for each pattern. Therefore, regardless of the display pattern selected, the set display area is displayed on the monitor 12, preventing situations where obstacles that the operator should be aware of during operation are not visible or difficult to confirm in the camera image. Therefore, depending on the selected display pattern, it is possible to prevent obstacles that the operator should be aware of during operation from not appearing or being difficult to confirm in the camera images.

(5) Additionally, since a touch panel 11 is adopted as the monitor operation device for operating the monitor 12, the operator can intuitively and easily enlarge or reduce the camera image by performing pinch operations on the touch panel 11.

### (Second embodiment)

The second embodiment of the present invention will be described. The difference between this embodiment and the first embodiment is that when the controller 200 detects that the non-operation state of the touch panel 11 exceeds the preset time α [s], it displays the camera image on the monitor 12 at the set magnification, and displays the set display area, similar to when the shut-off lever 18 is switched to the release position. Exceeding the set time α in a non-operation state means that the continuous duration of the current non-operation state exceeds the set time α, rather than the cumulative time of the touch panel 11 not being operated exceeding the set time α. As an example of the set time α, a duration of several seconds to a dozen or so seconds can be illustrated.

In this embodiment, the preset time α for determining the non-operation state of the touch panel 11 is set in advance for the non-operation continuous time Tm[s] of the touch panel 11. In this embodiment, the display image creation section 104 executes the determination of whether the non-operation continuous time Tm of the touch panel 11 exceeds the preset time α (Tm>a), and at the point when the non-operation continuous time Tm exceeds the preset time α, the display of the camera image is forcibly switched to the set display area regardless of the display area or display magnification of the camera image being displayed, even if the position of the shut-off lever 18 is at the restriction position. Of course, even if the non-operation continuous time Tm is less than or equal to the preset time α, when the shut-off lever 18 is switched to the release position, the display of the camera image forcibly switched to the set display area as in the first embodiment. In this embodiment, the display image creation section 104 executes a determination of whether the non-operation duration Tm of the touch panel 11 exceeds the set time α (Tm>α), and at the point when the non-operation duration Tm exceeds the set time α, it forcibly switches the display of the camera image to the set display area, regardless of the display area or display magnification of the camera image being displayed, even if the position of the shut-off lever 18 is at the restriction position. Of course, even if the non-operation duration Tm is less than or equal to the set time α, when the shut-off lever 18 is switched to the release position, the display of the camera image is forcibly switched to the set display area, as in the first embodiment.

### -Display Control-

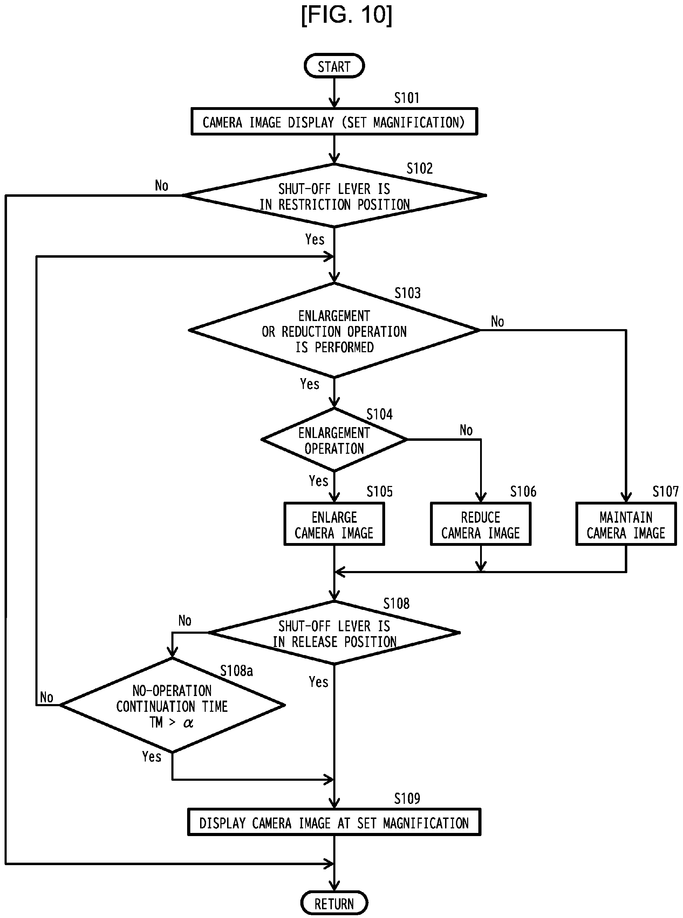

FIG. 10 is a flowchart illustrating the display control procedure of the monitor by the controller provided in the construction machinery according to the second embodiment of the present invention. FIG. 10 corresponds to FIG. 8 of the first embodiment, and in FIG. 10, the same or corresponding processes as in the first embodiment are given the same numbers as in FIG. 8, with explanations omitted as appropriate. The controller 200 repeatedly executes the flow of FIG. 10 periodically (for example, at a short cycle of about 0.1 seconds) during energization.

When the flow of FIG. 10 starts, the controller 200 executes steps S101-S108 as in the first embodiment, enlarges or reduces the camera image displayed on the monitor 12 when enlargement or reduction operations are performed on the touch panel 11, and determines whether the position of the shut-off lever 18 has been switched to the release position. If the shut-off lever 18 is switched to the release position, the procedure returns to step S101 via step S109.

In this embodiment, if it is determined that the position of the shut-off lever 18 remains at the restriction position, the controller 200 does not move the procedure to step S109 but moves the procedure from step S108 to step S108a, and determines whether the current non-operation continuous time Tm of the touch panel 11 exceeds the preset time α (Tm>α). If the non-operation continuous time Tm exceeds the preset time α, the controller 200 forcibly switches the display of the camera image currently displayed on the monitor 12 to the set display area (step S109), and returns the procedure to step S101. If the non-operation continuous time Tm is less than or equal to the preset time α, the controller 200 returns the procedure from step S108a to step S103. If the non-operation duration Tm exceeds the set time α, the controller 200 forcibly switches the display of the camera image currently shown on the monitor 12 to the set display area (step S109) and returns the procedure to step S101. If the non-operation continuous time Tm is less than or equal to the set time α, the controller 200 returns the procedure from step S108a to step S103.

Regarding other configurations and functions, the construction machinery of this embodiment is the same as the construction machinery of the first embodiment.

### -Effect-

According to this embodiment, when the non-operation continuous time Tm of the touch panel 11 exceeds the preset time α, the camera image displayed on the monitor 12 switches to the set display area even if the position of the shut-off lever 18 is at the restriction position. For example, while the operator is operating the monitor 12 with the operation of the operation lever devices 7a-7d restricted by the shut-off lever 18, the non-operation continuous time Tm does not exceed the preset time α. Therefore, by setting the position of the shut-off lever 18 to the restriction position, the operator can operate the touch panel 11 without restriction. Subsequently, for example, when the operator finishes operating the touch panel 11 and waits, the set display area is displayed in the camera image at the point when the non-operation continuous time Tm exceeds the preset time α. The same applies when switching the shut-off lever 18 to the release position to start the operation of the hydraulic excavator 1. In this embodiment, the same effect as in the first embodiment is obtained, and enlargement and reduction of the camera image are allowed only while operating the touch panel 11 with the operation of the operation lever devices 7a-7d restricted by the shut-off lever 18. For example, while the operator is operating the monitor 12 with the shut-off lever 18 restricting the operation of the operation lever devices 7a-7d, the non-operation duration Tm does not exceed the set time α. Therefore, by setting the position of the shut-off lever 18 to the restriction position, the operator can operate the touch panel 11 without restriction. Afterward, for example, when the operator finishes operating the touch panel 11 and waits, the set display area is displayed in the camera image once the non-operation duration Tm exceeds the set time α. The same applies when switching the shut-off lever 18 to the release position to start the operation of the hydraulic excavator 1. In this embodiment, the same effects as the first embodiment can be obtained, and it is possible to allow the enlargement and reduction of camera images only while operating the touch panel 11 with the operation of the operation lever devices 7a-7d restricted by the shut-off lever 18.

### (Third Embodiment)

The third embodiment of the present invention will be described. The difference between this embodiment and the first embodiment is that the controller 200, when an object is detected by the object detection device, displays the camera image on the monitor 12 at a set magnification, similar to when the shut-off lever 18 is switched to the release position, and displays the set display area on the monitor 12. In this embodiment, a configuration in which cameras 10a-10c also serve as an object detection devices will be described, but it is of course possible to use LiDAR 10D as the object detection device.

### -Controller-

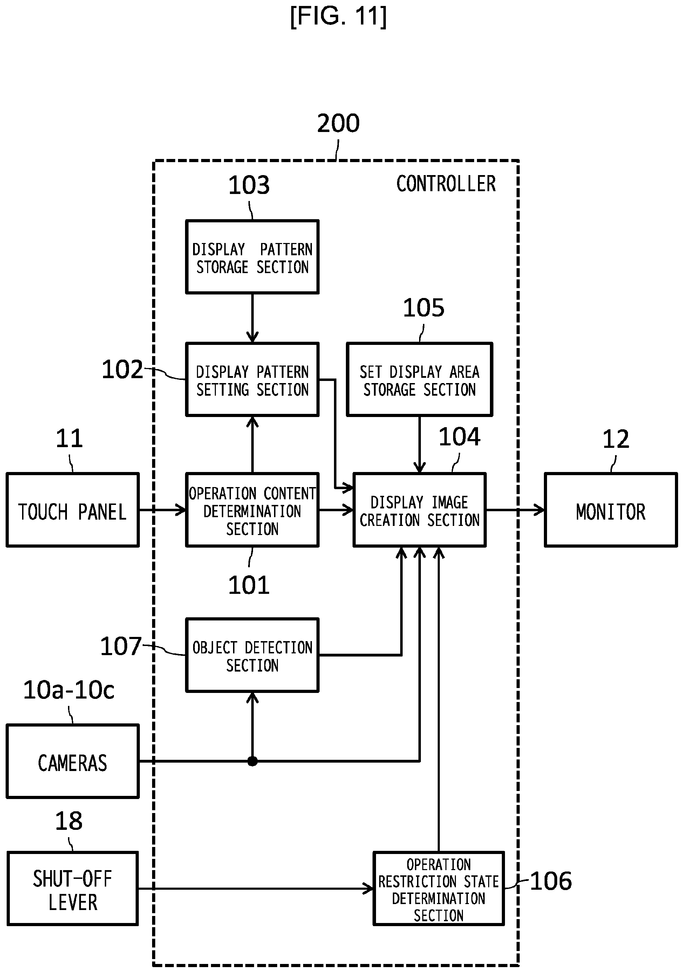

FIG. 11 is a block diagram schematically illustrating the functions of a controller for construction machinery according to the third embodiment of the present invention.

FIG. 11 corresponds to FIG. 4 of the first embodiment, and elements similar to or corresponding to those in the first embodiment are denoted by the same reference numerals as in FIG. 4, and descriptions are omitted as appropriate.

As shown in FIG. 11, the controller 200 includes an operation content determination section 101, a display pattern setting section 102, a display pattern storage section 103, a display image creation section 104, a set display area storage section 105, and an operation restriction state determination section 106, in addition to an object detection section 107, to execute the above display control. The object detection section 107 is a function executed by the arithmetic device (e.g., CPU) of the controller 200.

In this embodiment, the object detection section 107 detects objects based on the output of cameras 10a-10c. In this case, objects can be detected through image processing. Additionally, the area for detecting objects can be appropriately set within the shooting range of cameras 10a-10c, for example, so that it can be determined whether an object is detected in the set display area.

In this embodiment, the display image creation section 104 inputs the object detection determination result from the object detection section 107 based on the images captured by cameras 10a-10c, and if an object is detected, it forces the camera image of the set display area to be displayed on the monitor 12 at the set magnification, regardless of the display area or magnification of the currently displayed camera image, even if the position of the shut-off lever 18 is at the restriction position. Therefore, even while the camera image is being enlarged by operating the touch panel 11, if an object is detected, the display of the camera image is forcibly switched to the set display area. Of course, even if no object is detected, if the shut-off lever 18 is switched to the release position, the display of the camera image is forcibly switched to the set display area, as in the first embodiment.

### -Display Control-

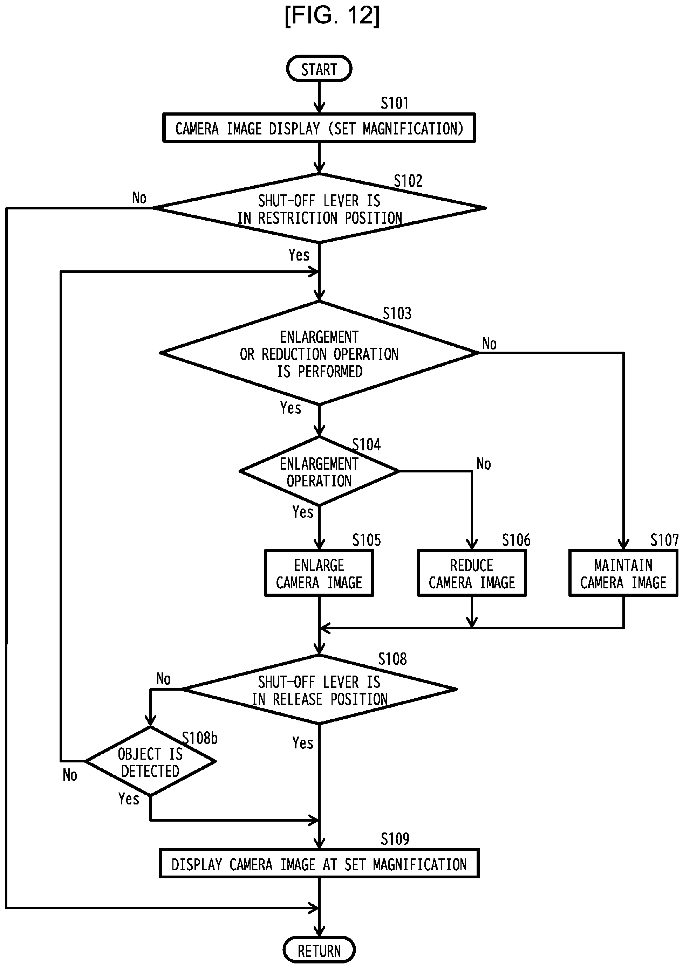

FIG. 12 is a flowchart illustrating the display control procedure of a monitor by a controller provided in construction machinery according to the third embodiment of the present invention. FIG. 12 corresponds to FIG. 8 of the first embodiment and FIG. 10 of the second embodiment, and processes similar to or corresponding to those in the first or second embodiment are denoted by the same numbers as in FIG. 8 or FIG. 10, and descriptions are omitted as appropriate. The controller 200 periodically executes the flow of FIG. 12 (e.g., at a short cycle of about 0.1s) while powered on.

When the flow of FIG. 12 starts, the controller 200 executes steps S101-S108 as in the first and second embodiments, enlarges or reduces the camera image displayed on the monitor 12 when the touch panel 11 is operated for enlargement or reduction, and determines whether the position of the shut-off lever 18 has been switched to the release position, and if the shut-off lever 18 has been switched to the release position, the procedure returns to step S101 via step S109.

In this embodiment, if it is determined that the position of the shut-off lever 18 remains at the restriction position, the controller 200 does not move the procedure to step S109 but moves the procedure from step S108 to step S108b to determine whether an object has been detected by cameras 10a-10c. If an object is detected, the controller 200 forcibly switches the display of the currently displayed camera image on the monitor 12 to the set display area (step S109) and returns the procedure to step S101. If no object is detected, the controller 200 returns the procedure from step S108b to step S103.

Regarding other configurations and functions, the construction machinery of this embodiment is similar to the construction machinery of the first or second embodiment.

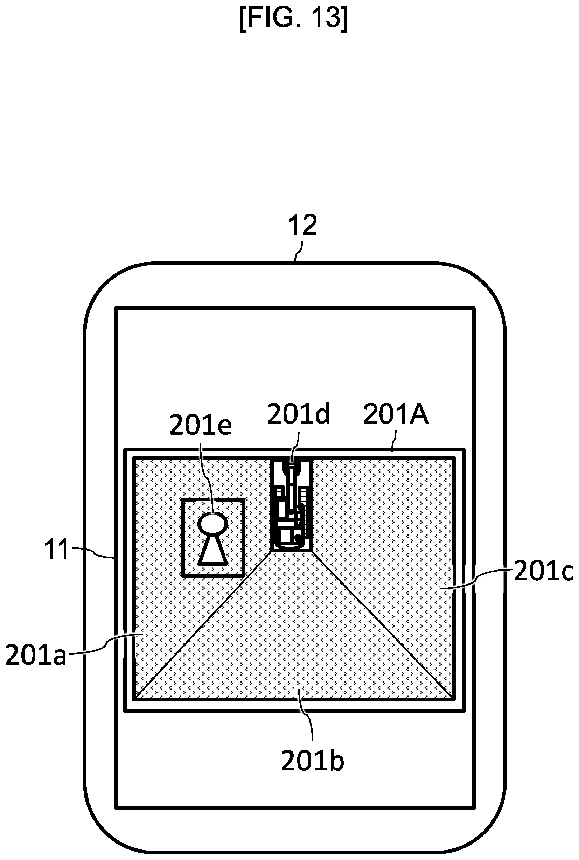

FIG. 13 is a diagram illustrating an example of a camera image of the set display area that is forcibly displayed when an object is detected in this embodiment. The camera image 201A shown in FIG. 13 is an image that captures the set display area as described in FIG. 9A, and in FIG. 13, the detected obstacle 201e is displayed in the area 201a to the left of the hydraulic excavator icon 201d. In FIG. 13, a human is illustrated as the obstacle 201e, but if other construction machinery or structures are detected as obstacles, they are displayed in the same manner.

### -Effect-

In this embodiment, the same effects as in the first embodiment are obtained. In addition, when an object is detected, the camera image switches to the set display area, so for example, if an obstacle 201e such as a human or other construction machinery approaches the vehicle body 1B while the operation of the hydraulic excavator 1 is interrupted and the camera image is enlarged to check the state near the vehicle body 1B, the display of the camera image automatically switches to the set display area, and the obstacle 201e approaching the vehicle body 1B is displayed on the monitor 12. This allows the operator to quickly become aware of the presence of obstacles 201e around the vehicle body 1B before starting the operation of the hydraulic excavator 1.

It should be noted that this embodiment can be combined with the second embodiment. In this case, the enlargement and reduction of the camera image are allowed on the condition that the operation of the operation lever devices 7a-7d is disabled by the shut-off lever 18, and if the shut-off lever 18 is switched to the release position, if the non-operation continuous time Tm of the touch panel 11 exceeds the set time α, or if the obstacle 201e is detected, the display magnification of the camera image is set to the set magnification regardless of the display area or magnification of the currently displayed camera image, and the camera image of the set display area is displayed on the monitor 12.

### (Fourth Embodiment)

The fourth embodiment of the present invention will be described. The difference between this embodiment and the first embodiment is that the controller 200 displays the camera image on the monitor 12 at a set magnification and displays the set display area on the monitor 12 when the output or rate of change of the output of the acceleration sensor 8d exceeds a predetermined value. The predetermined value is a threshold set in advance to detect collisions between the hydraulic excavator 1 (e.g., vehicle body 1B) and obstacles (e.g., other construction machinery or falling rocks).

### -Controller-

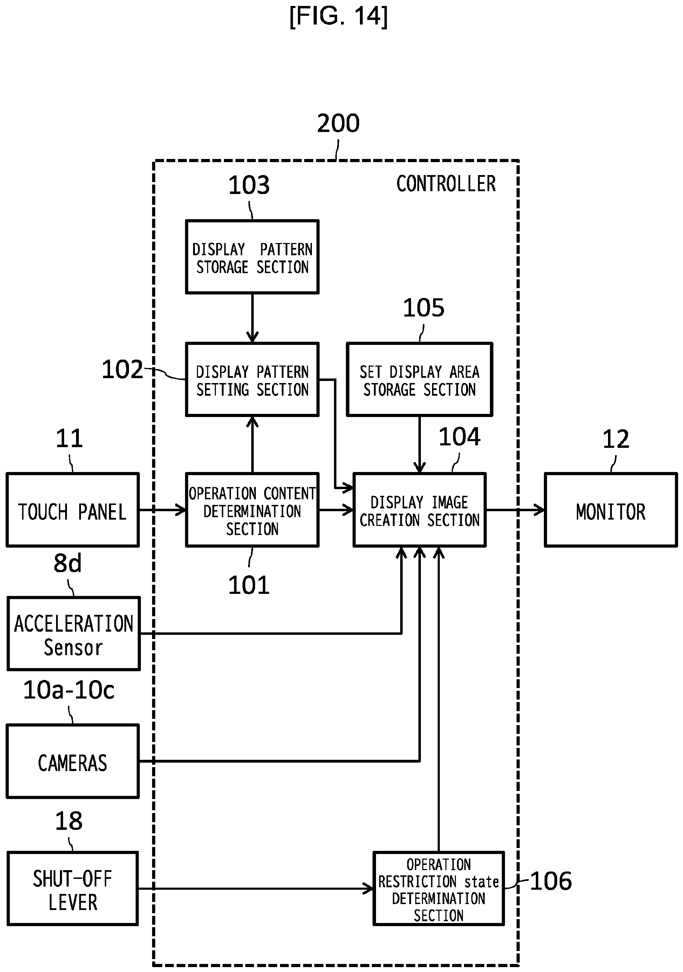

FIG. 14 is a block diagram schematically illustrating the functions of a controller for construction machinery according to the fourth embodiment of the present invention. FIG. 14 corresponds to FIG. 4 of the first embodiment and FIG. 11 of the third embodiment, and elements similar to or corresponding to those in the described embodiments are denoted by the same reference numerals as in FIG. 4 and FIG. 11, and descriptions are omitted as appropriate.

In this embodiment, the display image creation section 104 inputs the output signal A of the acceleration sensor 8d, and if the output or rate of change of the output of the acceleration sensor 8d exceeds the predetermined value β, it forces the camera image of the set display area to be displayed on the monitor 12 at the set magnification, regardless of the display area or magnification of the currently displayed camera image, even if the position of the shut-off lever 18 is at the restriction position. Therefore, even while the camera image is being enlarged by operating the touch panel 11, if another construction machine collides with the vehicle body 1B or the vehicle body 1B is subjected to an impact, the display of the camera image is forcibly switched to the set display area. Of course, even if the output or rate of change of the output of the acceleration sensor 8d does not exceed the predetermined value, if the shut-off lever 18 is switched to the release position, the display of the camera image is forcibly switched to the set display area, as in the first embodiment.

### -Display Control-

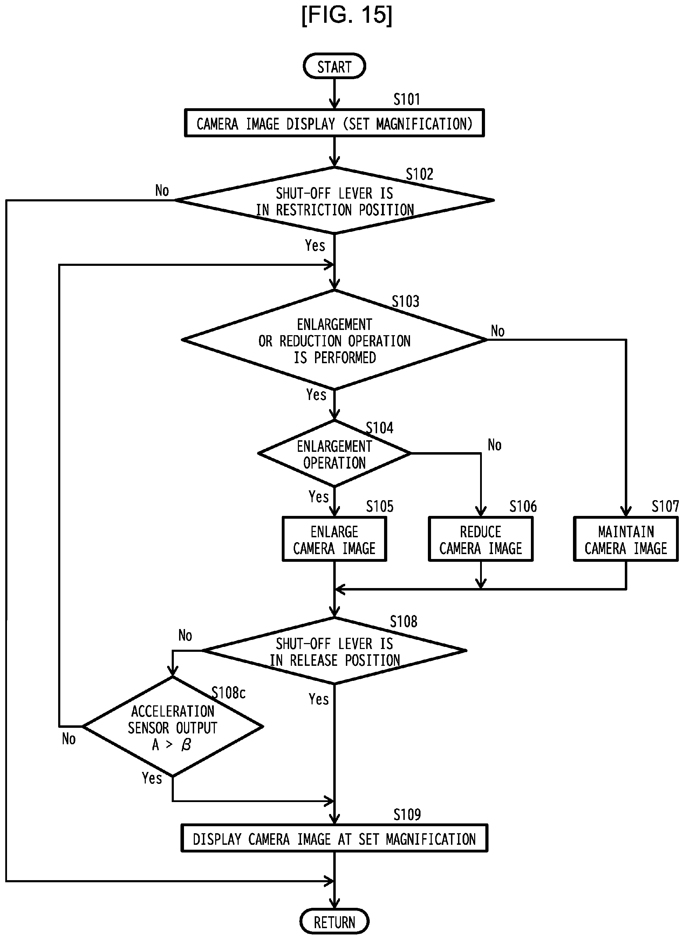

FIG. 15 is a flowchart illustrating the display control procedure of a monitor by a controller provided in construction machinery according to the fourth embodiment of the present invention. FIG. 15 corresponds to FIG. 8, FIG. 10, and FIG. 12 of the described embodiments, and processes similar to or corresponding to those in the described embodiments are denoted by the same numbers as in FIG. 8, FIG. 10, or FIG. 12, and descriptions are omitted as appropriate. The controller 200 periodically executes the flow of FIG. 15 (e.g., at a short cycle of about 0.1s) while powered on.

When the flow of FIG. 15 starts, the controller 200 executes steps S101-S108 as in the described embodiments, enlarges or reduces the camera image displayed on the monitor 12 when the touch panel 11 is operated for enlargement or reduction, and determines whether the position of the shut-off lever 18 has been switched to the release position, and if the shut-off lever 18 has been switched to the release position, the procedure returns to step S101 via step S109.

In this embodiment, if it is determined that the position of the shut-off lever 18 remains at the restriction position, the controller 200 does not move the procedure to step S109 but moves the procedure from step S108 to step S108c to determine whether the output or the rate of change that is input in real-time from the acceleration sensor 8d exceeds the predetermined value. If the output or rate of change of the output of the acceleration sensor 8d exceeds the predetermined value, the controller 200 forcibly switches the display of the currently displayed camera image on the monitor 12 to the set display area (step S109) and returns the procedure to step S101. If the output of the acceleration sensor 8d or its rate of change is below the predetermined value, the controller 200 returns the procedure from step S108c to step S103.

Regarding other configurations and functions, the construction machinery of this embodiment is similar to the construction machinery of the aforementioned embodiments.

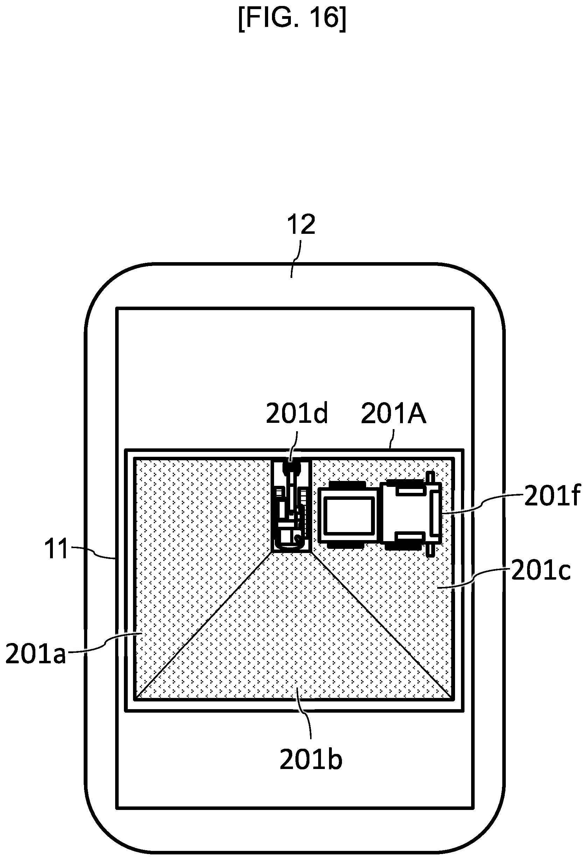

FIG. 16 is a diagram showing an example of a camera image of the set display area that is forcibly displayed when the output or rate of change of the output of the acceleration sensor 8d exceeds a predetermined value in this embodiment. The camera image 201A shown in FIG. 16 is an image capturing the set display area as explained in FIG. 9A, and in FIG. 16, an obstacle 201f that collided with the vehicle body 1B is displayed in the area 201c to the right of the hydraulic excavator icon 201d. In FIG. 16, a dump truck is exemplified as the obstacle 201f, but other obstacles such as construction machinery or objects (e.g., falling rocks) are also displayed in the same manner if a collision with the hydraulic excavator 1 is detected based on the output of the acceleration sensor 8d.

### -Effect-

In this embodiment, the same effect as the first embodiment is obtained. Additionally, when the output or rate of change of the output of the acceleration sensor 8d exceeds a predetermined value, the display of the camera image switches to the set display area. For example, if an obstacle 201f such as other construction machinery collides with the vehicle body 1B while the operation of the hydraulic excavator 1 is interrupted and the camera image is enlarged to check the state near the vehicle body 1B, the display of the camera image automatically switches to the set display area, and the obstacle 201f that collided with the hydraulic excavator 1 is displayed on the monitor 12. This allows the operator to quickly know the obstacle 201f that collided with the hydraulic excavator 1, the collision position of the obstacle 201f relative to the hydraulic excavator 1, the state of the collision, etc.

It should be noted that this embodiment explains an example where the function of display control according to the output of the acceleration sensor 8d is added to the first embodiment, but it goes without saying that it can be combined with at least one of the second embodiment and the third embodiment.

### (Fifth Embodiment)

The fifth embodiment of the present invention will be described. The difference between this embodiment and the first embodiment is that the controller 200 stores a wide display area set wider than the set display area in addition to the set display area, and when switching the display of the monitor 12 to the camera image of the set display area, it displays the camera image of the wide display area on the monitor 12 first, then switches to the camera image of the set display area. As an example, when setting the area 204a in FIG. 7 as the set display area, the area 204b in the same figure can be set as the wide display area.

In this embodiment, the wide display area is pre-set and stored in the set display area storage section 105 along with the set display area. In this embodiment, when the shut-off lever 18 is switched to the release position, the display image creation section 104 forcibly switches the display of the camera image to the wide display area regardless of the display area or display magnification of the camera image being displayed, and after displaying the wide display area for a predetermined time (e.g., several seconds), switches the display to the set display area.

### -Display Control-

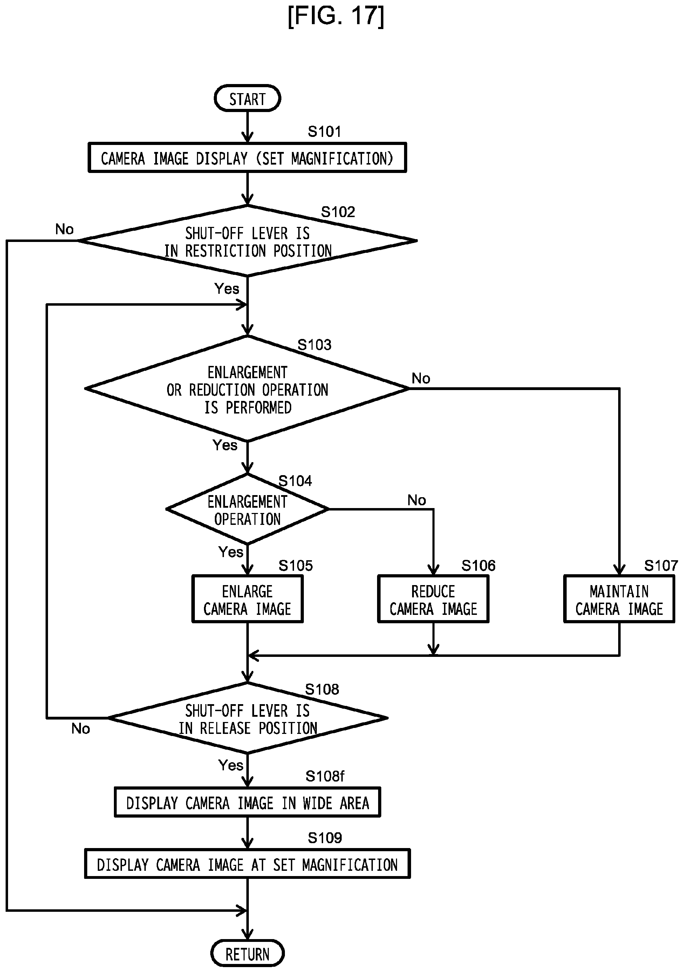

FIG. 17 is a flowchart showing the monitor display control procedure by the controller provided in the construction machinery according to the fifth embodiment of the present invention. FIG. 17 corresponds to FIGS. 8, 10, 12, and 15 of the described embodiments, and similar or corresponding processes to the described embodiments in FIG. 17 are given the same numbers as FIGS. 8, 10, 12, or 15, and explanations are appropriately omitted. The controller 200 periodically executes the flow of FIG. 17 during energization (e.g., at a short cycle of about 0.1s).

When the flow of FIG. 17 starts, the controller 200 executes steps S101-S108 as in the described embodiments, and if the touch panel 11 is operated for enlargement or reduction, it enlarges or reduces the camera image displayed on the monitor 12, and determines whether the position of the shut-off lever 18 has been switched to the release position. If the position of the shut-off lever 18 is the release position, the controller 200 creates a camera image capturing the wide display area regardless of the display magnification or display area of the camera image being displayed, and displays it on the monitor 12 for a predetermined time (step S108f), then displays the camera image capturing the set display area on the monitor 12 (step S109), and returns the procedure to step S101. For example, the image is that the camera image 201B of FIG. 9B is temporarily displayed, then the display switches to the camera image 201A of FIG. 9A. If the position of the shut-off lever 18 is the restriction position, the controller 200 returns the procedure from step S108 to step S103.

Regarding other configurations and functions, the construction machinery of this embodiment is similar to the construction machinery of the aforementioned embodiments.

FIG. 16 is a diagram showing an example of a camera image of the set display area that is forcibly displayed when the output or rate of change of the output of the acceleration sensor 8d exceeds a predetermined value in this embodiment. The camera image 201A shown in FIG. 16 is an image capturing the set display area as explained in FIG. 9A, and in FIG. 16, an obstacle 201f that collided with the vehicle body 1B is displayed in the area 201c to the right of the hydraulic excavator icon 201d. In FIG. 16, a dump truck is exemplified as the obstacle 201f, but other obstacles such as construction machinery or objects (e.g., falling rocks) are also displayed in the same manner if a collision with the hydraulic excavator 1 is detected based on the output of the acceleration sensor 8d.

### -Effect-

In this embodiment, the same effect as the first embodiment is obtained. Additionally, since the display of the camera image switches stepwise from the wide display area to the set display area, the operator can quickly check the surroundings of the hydraulic excavator 1 with the camera image of the wide display area before the display of the camera image switches to the set display area.

It should be noted that this embodiment explains an example where the stepwise switching of the display area is applied to the first embodiment, but it goes without saying that it can be applied to the second embodiment, third embodiment, fourth embodiment, and any embodiment combining at least two of these.

### (Modification Example)

The present invention is not limited to the above embodiments and may include various modification examples. For example, the present invention is not necessarily limited to configurations that include all the configurations described in the above embodiments. For example, it is possible to replace part of the configuration with another configuration. Additionally, it is possible to delete part of the configuration of the embodiment or add other configurations.

For example, as a monitor operation device for operating the monitor 12, the above embodiment explained an example using a touch panel 11, but the monitor operation device may be an operation device using physical buttons, dials, switches, etc. Furthermore, although the hydraulic excavator 1 configured to the plurality of cameras 10a-10c was explained as an example, the present invention is also applicable to a hydraulic excavator 1 configured to only one camera. Moreover, although the hydraulic excavator 1 was explained as an example of construction machinery to which the invention is applied, the present invention is also applicable to other construction machinery such as wheel loaders.

### Reference Numerals

1: Hydraulic excavator (construction machinery), 1A: Front work device, 1B: Vehicle body, 7a-7d: Operation lever device, 8d: Acceleration sensor, 10a-10c: Camera (object detection device), 10D: LiDAR (object detection device), 11: Touch panel (monitor operation device), 12: Monitor, 18: Shut-off lever, 200: Controller, 201: Camera image (bird's-eye view), 201A: Camera image (set display area), 201B: Camera image (wide display area), 201C: Camera image (magnified display), 202: Camera image, Tm: No-operation continuation time, α: Set time

## Claims

1. A construction machinery comprising:
a vehicle body;
a front work device attached to the vehicle body;
an operation lever device for operating the vehicle body or the front work device;
a shut-off lever for restricting the operation of the operation lever device;
a camera for capturing a surrounding of the vehicle body;
a monitor configured to display the camera images captured by the camera;
a monitor operation device configured to instruct the magnification of the display ratio of the camera images displayed on the monitor; and
a controller configured to control the display on the monitor based on the operation of the monitor operation device,
wherein the controller is configured to control the display such that:
if the operation of the operation lever device is restricted by the shut-off lever, the camera images displayed on the monitor are enlarged based on the display ratio instructed by the monitor operation device; and
if the magnification of the display ratio is instructed by the monitor operation device and the restriction on the operation of the operation lever device by the shut-off lever is cancelled, the camera images on the monitor are displayed at a predetermined display ratio.

2. The construction machinery according to claim 1,
wherein the controller is configured to display the camera images on the monitor at the predetermined display ratio if the no-operation state of the monitor operation device exceeds a preset time.

3. The construction machinery according to claim 1,
wherein a plurality of cameras are provided, and
the controller is configured to synthesize the images captured by the plurality of cameras to generate a bird's-eye view image of the vehicle body as the camera images.

4. The construction machinery according to claim 3,
further comprising an object detection device for detecting objects around the vehicle body, and
the controller is configured to display the camera images on the monitor at the predetermined display ratio if an object is detected by the object detection device.

5. The construction machinery according to claim 4,
wherein the camera is configured to serve as the object detection device.

6. The construction machinery according to claim 3,
further comprising an acceleration sensor provided on the vehicle body, and
the controller is configured to display the camera images on the monitor at the predetermined display ratio if the output or the rate of change of the output of the acceleration sensor exceeds a predetermined value.

7. The construction machinery according to claim 1,
wherein the controller is configured to store a preset display area for the camera images and a wide display area set wider than the preset display area, so that a predetermined area around the vehicle body is displayed on the monitor, and
when switching the monitor display to the camera images of the preset display area, the controller is configured to display the camera images of the wide display area on the monitor at first, then switches to the camera images of the preset display area.
